(19) **Europäisches Patentamt**

**European Patent Office**

**Office européen des brevets**

(11) **EP 1 290 545 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.7: **G06F 7/72**

(21) Anmeldenummer: 01943373.9

(22) Anmeldetag: **15.05.2001**

(86) Internationale Anmeldenummer:
**PCT/EP2001/005532**

(87) Internationale Veröffentlichungsnummer:
**WO 2001/088693 (22.11.2001 Gazette 2001/47)**

(54) **KRYPTOGRAPHISCHES VERFAHREN UND KRYPTOGRAPHISCHE VORRICHTUNG**

CRYPTOGRAPHIC METHOD AND CRYPTOGRAPHIC DEVICE

PROCEDE ET DISPOSITIF CRYPTOGRAPHIQUES

(84) Benannte Vertragsstaaten:
**AT BE CH CY DE DK ES FI FR GB GR IE IT LI LU MC NL PT SE TR**

(30) Priorität: **17.05.2000 DE 10024325**

(43) Veröffentlichungstag der Anmeldung:
**12.03.2003 Patentblatt 2003/11**

(73) Patentinhaber: **Giesecke & Devrient GmbH
81677 München (DE)**

(72) Erfinder: **SEYSEN, Martin
80809 München (DE)**

(74) Vertreter: **Klunker . Schmitt-Nilson . Hirsch
Winzererstrasse 106
80797 München (DE)**

(56) Entgegenhaltungen:
**WO-A-98/52319          GB-A- 2 318 892**

- **BONEH D ET AL: "ON THE IMPORTANCE OF CHECKING CRYPTOGRAPHIC PROTOCOLS FOR FAULTS" ADVANCES IN CRYPTOLOGY-EUROCRYPT. INTERNATIONAL CONFERENCE ON THE THEORY AND APPLICATION OF CRYPTOGRAPHIC TECHNIQUES, SPRINGER VERLAG, DE, 11. Mai 1997 (1997-05-11), Seiten 37-51, XP000775761 in der Anmeldung erwähnt**

**Beschreibung**

Kryptographische Verfahren in Gestalt von Verschlüsselungs- und Signaturverfahren erfreuen sich insbesondere durch die steigende Bedeutung des elektronischen Geschäftsverkehres einer stetig wachsenden Verbreitung. Sie werden in der Regel mittels elektronischer Vorrichtungen implementiert, die beispielsweise einen programmierbaren universellen Microkontroller oder auch eine spezialisierte elektronische Schaltung etwa in Gestalt eines ASIC beinhalten können. Eine besonders interessante Form kryptographischer Vorrichtungen ist die Chipkarte, da sich in ihr bei zweckdienlicher technischer Ausgestaltung geheime Schlüsseldaten gegen unbefugten Zugriff schützen lassen. Ein ständiges Bemühen gilt dabei sowohl der Verbesserung der Ausführungsgeschwindigkeit der kryptographischen Verfahren als auch deren Sicherung gegen alle denkbaren Arten von Angriffen. Die Erfindung eignet sich insbesondere für den Einsatz im Zusarrunenhang mit Chipkarten, ist aber in keiner Weise darauf beschränkt. Sie ist vielmehr im Zusammenhang mit allen Arten von kryptographischen Vorrichtungen implementierbar.

Bei einer Reihe bekannter kryptographischer Verfahren ist es erforderlich, eine modulare Exponentiation gemäß der Gleichung

$$E = x^d \ (\text{mod } N) = x^d \ (\text{mod } p \cdot q) \tag{1}$$

durchzuführen, wobei p und q Primzahlen sind. Ein besonders bedeutendes kryptographisches Verfahren, welches einen modularen Exponentiationsschritt beinhaltet, ist das beispielsweise aus Alfred J. Menezes, Paul C. van Oorschot und Scott A. Vanstone, "Handbook of Applied Cryptography", Boca Raton: CRC Press, 1997, Seiten 285 bis 291, bekannte RSA-Verfahren. Die Verwendung der modularen Exponentiation ist jedoch nicht auf das RSA-Verfahren beschränkt, sondern umfaßt beispielsweise auch aus Menezes et al., a.a.O., Seiten 438 bis 442, bekannte Rabin-Signaturen und das aus Menezes et al., a.a.O., Seite 408 bis 410, bekannte Fiat-Shamir'sche Identifikationsschema.

Die Sicherheit von kryptographischen Verfahren, die die modulare Exponentiation einbeziehen, ist regelinäßig abhängig von der Schwierigkeit, die Zahl N aus Gleichung (1) in ihre Primfaktoren p und q zerlegen zu können. Dieses Problem ist nur für hinreichend große Werte N von ausreichender Komplexität, so daß einerseits N möglichst groß gewählt werden sollte. Der Rechenaufwand zur Berechnung von Werten mittels modularer Exponentiation gemäß Gleichung (1) steigt andererseits monoton mit der Größenordnung von N, so daß es unter dem Gesichtspunkt der praktischen Anwendbarkeit wünschenswert wäre, trotz großer Werte von N den Rechenzeitaufwand auf akzeptable Werte beschränken zu können.

Es ist bekannt, durch Anwendung des sog. "Chinesischen Restwertsatzes" die Rechengeschwindigkeit um einen Faktor 4 erhöhen zu können, wodurch beispielsweise bei gleicher Rechenzeit größere Werte N zugelassen werden können. Statt unmittelbar die Gleichung (1) auszuwerten, wird eine Umformung vorgenommen gemäß

$$E = x^d \ (\text{mod } p \cdot q) = aE_1 + bE_2 \ (\text{mod } N) \tag{2}$$

mit

$$E_1 = x^d \ (\text{mod } p) \tag{3}$$

$$E_2 = x^d \ (\text{mod } q) \tag{4}$$

Eine Folge der Anwendung des Chinesischen Restwertsatzes besteht darin, daß die modulare Exponentiation nicht mehr modulo N, also modulo derjenigen Zahl, die ihre eigene Primfaktorzerlegung noch in sich verbirgt, sondern nacheinander in einem ersten Teilschritt modulo p und in einem zweiten Teilschritt modulo q erfolgt, d.h. die Kenntnis der geheimzuhaltenden Primfaktorzerlegung n = p·q wird bei dieser Rechenvorschrift vorausgesetzt und führt zu einer Aufteilung des Gesamtrechenprozesses in einen ersten Rechenschritt (3), in den der erste Primfaktor wesentlich eingeht, und einen zweiten Rechenschritt (4), in den der zweite Primfaktor wesentlich eingeht. Der Vorteil hierbei liegt darin, daß der Exponent d in Gleichung (1) modulo $\phi(p \cdot q)$ definiert sein muß, wohingegen die Exponenten in Gleichung (2) lediglich modulo $\phi(p)$ bzw. $\phi(q)$ definiert sein müssen, wobei mit $\phi$ die Euler'sche Funktion notiert ist.

Interessanterweise ist nun in der letzten Zeit ein Angriffsschema auf solche kryptographischen Verfahren, die die modulare Exponentiation nutzen, bekannt geworden, bei dem durch einen geeigneten artifiziellen Eingriff in den ansonsten störungsfreien Rechenablauf aus dem fehlerhaften Ergebnis einer gestörten modularen Exponentiation die Information über die Primfaktorzerlegung von N zurückgewonnen werden kann, sofern die konkrete Implementation von dem Chinesischen Restwertsatz gemäß den Gleichungen (2) bis (4) Gebrauch macht. Dieser als "Bellcore-Angriff" bekannte Versuch ist beispielsweise in Dan Boneh, Richard A. DeMillo und Richard J. Lipton: "On the importance of checking Cryptographic Protocols for Faults", Advances in Cryptology -EUROCRYPT, 97, Lecture Notes in Computer Science 1233, Berlin: Springer, 1997 beschrieben. Eine Verschlüsselungseinrichtung wird durch physikalische Eingriffe wie beispielsweise Übertaktung, zu hohe Betriebsspannung oder Bestrahlung manipuliert, so daß mit einer gewissen, nicht zu großen Wahrscheinlichkeit Rechenfehler bei der Ausführung der modularen Exponentiation nach dem Chinesischen Restwertsatz auftreten. Wenn ein Rechenfehler nur bei einem der beiden Terme in Gleichung (2) auftritt, können die beiden Primfaktoren p und q aus dem fehlerbehafteten Exponentiationsergebnis rekonstruiert werden.

Die aus dieser Verletzlichkeit der mittels des Chinesischen Restwertsatzes implementierten modularen Exponentiation zu ziehende Konsequenz besteht darin, das Ergebnis des Rechenvorganges zuerst auf seine Korrektheit zu prüfen, bevor es weiterverarbeitet, insbesondere aber bevor es in irgend einer Form, etwa in Gestalt einer Signatur, ausgegeben wird.

Ein triviales Gegenmittel gegen den "Bellcore-Angriff" besteht darin, diese Korrektheitsprüfung dadurch zu bewerkstelligen, indem der Rechenvorgang mindestens einmal wiederholt wird. Bei zufälligen Rechenfehlern kann davon ausgegangen werden, daß das Ergebnis des ersten Rechenganges von demjenigen der Kontrollrechengänge abweicht. Der wesentliche Nachteil dieses Ansatzes besteht darin, daß sich die Rechenzeit bereits bei einer Kontrollrechnung verdoppelt.

Aus der Druckschrift WO-A1-98/52319 ist insbesondere ein Verfahren zum Schutz von eine modulare Exponentiation nach dem Chinesischen Restwertsatz ausführenden Rechenoperationen gegen den "Bellcore-Angriff" bekannt. Dabei wird eine geheime ganz Zahl j beispielsweise im Bereich $[0,2^k-1]$ mit $16 \leq k \leq 32$ ausgewählt. Sodann werden folgende Ausdrücke berechnet

$$v_1 = x \ (\mathrm{mod} \ j{\cdot}p) \tag{5}$$

$$v_2 = x \ (\mathrm{mod} \ j{\cdot}q) \tag{6}$$

$$d_1 = d \ (\mathrm{mod} \ \phi(j{\cdot}p)) \tag{7}$$

$$d_2 = d \ (\mathrm{mod} \ \phi(j{\cdot}q)) \tag{8}$$

$$w_1 = v_1^{d1} \ (\mathrm{mod} \ j{\cdot}p) \tag{9}$$

$$w_2 = v_2^{d2} \ (\mathrm{mod} \ j{\cdot}q) \tag{10}$$

Sodann wird geprüft, ob gilt:

$$w_1 = w_2 \ (\mathrm{mod} \ j) \tag{11}$$

Kann der Ausdrucke (11) verifiziert werden, so werden bei dem bekannten Verfahren folgende Ausdrücke berechnet

$$y_1 = w_1 \ (\mathrm{mod} \ p) \tag{12}$$

$$y_2 = w_2 \ (\mathrm{mod} \ q) \tag{13}$$

woraus dann mittels des Chinesischen Restwertsatzes der Wert für

$$E = x^d \ (\text{mod } N) \qquad (14)$$

ermittelt werden kann.

Dieses bekannte Verfahren weist gegenüber einfachen Kontrollrechengängen den Vorteil auf, daß der zusätzliche Rechenzeitaufwand wesentlich geringer ist.

Bei diesem Verfahren müssen beide Primzahlen p und q mit demselben Faktor d multipliziert werden. In der Druckschrift WO-A2-98/52319 ist ein zweites Verfahren beschrieben, welches es erlaubt, die Primzahlen p und q mit verschiedenen Faktoren r und s zu multiplizieren. Hierbei sind jedoch für die Kontrollrechnung zwei weitere Exponentiationen möglich.

Aufgabe der Erfindung ist es, ein kryptographisches Verfahren bzw. eine kryptographische Vorrichtung anzugeben, bei dem bzw. bei der unter Beibehaltung oder Erhöhung der Sicherheit Rechenoperationen oder Rechenzeit eingespart werden kann.

Diese Aufgabe wird erfindungsgemäß gelöst durch ein kryptographisches Verfahren mit den in Anspruch 1 oder 2 angegebenen Merkmalen als auch durch eine kryptographische Vorrichtung mit den in Anspruch 13 oder 14 angegebenen Merkmalen.

Den abhängigen Ansprüchen 3 bis 12 sowie 15 bis 24 sind vorteilhafte Weiterbildungen entnehmbar.

Wie weiter unten erwähnt wird, ist es auf bestimmten Rechenwerken vorteilhaft, wenn ein Modulus bei der modularen Exponentiation viele führende binäre Einsen besitzt, so daß verschiedene Faktoren r und s hier einen gewissen Vorteil bedeuten. Ferner gibt es für die modulare Exponentiation optimierte Rechenwerke, wobei aber allein der Datentransfer von der Zentraleinheit in das optimierte Rechenwerk für die Exponentiation einen beträchtlichen Verwaltungsaufwand verursacht. Die vorliegende Erfindung spart gegenüber dem oben beschriebenen Verfahren bei verschiedenen Faktoren r und s eine Exponentiation ein.

Erfindungsgemäß werden zwei ganze Zahlen r und s beispielsweise im Bereich $[0, 2^k-1]$ mit $16 \leq k \leq 32$ ausgewählt, so daß d teilerfremd zu $\phi(\text{kgV}(r,s))$ ist, wobei $\text{kgV}(r,s)$ das kleinste gemeinsame Vielfache von r und s angibt, und $\phi()$ die Euler'sche Funktion darstellt. Sodann werden folgende Ausdrükke berechnet:

$$x_1 = x \ (\text{mod } p.r) \qquad (15)$$

$$x_2 = x \ (\text{mod } q \cdot s) \qquad (16)$$

$$d\_1 = d \ (\text{mod } \phi(p \cdot r)) \qquad (15)$$

$$d\_2 = d \ (\text{mod } \phi(q \cdot s)) \qquad (16)$$

$$z_1 = x_1^{d\_1} \ (\text{mod } p \cdot r) \qquad (15)$$

$$z_2 = x_2^{d\_2} \ (\text{mod } q \cdot s) \qquad (16)$$

Jetzt gilt $z_1 = x^d \ (\text{mod } p \cdot r)$ und $z_2 = x^d \ (\text{mod } q \cdot s)$. Nach dem Chinesischen Restwertsatz läßt sich aus $z_1$ und $z_2$ leicht eine Zahl z berechnen mit

$$z = z_1 \ (\text{mod } p \cdot r) \ ; \ z = z_2 \ (\text{mod } q \cdot s) \ ; \ z = x^d \ (\text{mod } p \cdot q \cdot \text{kgV}(r,s)) \qquad (17)$$

Die Zahlen r und s müssen erfindungsgemäß so gewählt werden, daß d teilerfremd ist zu $\phi(\text{kgV}(r,s))$. Unter diesen Umständen läßt sich mit Hilfe des erweiterten Euklid'schen Algorithmus leicht eine natürliche Zahl e finden mit

$$e \cdot d = 1 \ (\text{mod } \phi(\text{kgV}(r,s))) \qquad (18)$$

Mit Hilfe von Z und e wird die Zahl C wie folgt berechnet:

$$C = z^e \ (\text{mod kgV}(r,s)) \tag{19}$$

Nach dem Satz von Euler gilt:

$$C = x^{d \cdot e} = x \ (\text{mod kgV}(r,s)) \tag{20}$$

Durch Vergleich der beiden Werte C und x modulo kgV(r,s) läßt sich ein Fehler mit hoher Wahrscheinlichkeit feststellen. Wenn $C \neq x$ (mod kgV(r,s)) festgestellt wird, ist das Ergebnis der modularen Exponentiation als fehlerbehaftet anzusehen und zu verwerfen.

Bei RSA-Verfahren (ebenso wie beim Rabin'schen Signaturverfahren) ist zur Erzeugung einer digitalen Signatur oder zur Entschlüsselung eine modulare Exponentiation durchzuführen, wobei der Modulus p·q und Exponent d nur vom privaten Schlüssel abhängen. Infolgedessen können die Zahlen d, e, r und s einmal beim Einbringen des privaten Schlüssel berechnet und zur Wiederverwendung abgespeichert werden.

In einer Variante der Erfindung werden ebenfalls zwei ganze Zahlen r und s beispielsweise im Bereich [0, $2^k$-1] mit $16 \leq k \leq 32$ ausgewählt. Auf einem binären Rechenwerk wird empfohlen, daß die Zahlen r und s beide ungerade sind. Außerdem werden zwei feste, nicht von x abhängige Zahlen $b_1$ und $b_2$ im Intervall [1,...,r-1] bzw. [1,...,s-1] und teilerfremd zu r bzw. s gewählt. Falls r und s nicht teilerfremd sind, müssen $b_1$ und $b_2$ die zusätzliche Bedingung $b_1 = b_2$ (mod ggT(r,s)) erfüllen, wobei ggT(r,s) den größten gemeinsamen Teiler von r und s bezeichnet.

Nach dem Chinesischen Restsatz wird zunächst eine Zahl $x_1$ berechnet mit

$$x_1 = x \ (\text{mod } p) \ , \ x_1 = b_1 \ (\text{mod } r) \tag{21}$$

Ebenso wird eine Zahl $x_2$ berechnet mit

$$x_2 = x \ (\text{mod } q) \ , \ x_2 = b_2 \ (\text{mod } s) \tag{22}$$

Sodann werden folgende Ausdrücke berechnet:

$$d\_1 = d \ (\text{mod } \phi(p)) \tag{23}$$

$$d\_2 = d \ (\text{mod } \phi(q)) \tag{24}$$

$$z_1 = x_1^{\ d\_1} \ (\text{mod } p \cdot r) \tag{25}$$

$$z_2 = x_2^{\ d\_2} \ (\text{mod } q \cdot s) \tag{26}$$

$$C_1 = b_1^{\ d\_1} \ (\text{mod} \cdot r) \tag{27}$$

$$C_2 = b_2^{\ d\_2} \ (\text{mod} \cdot s) \tag{28}$$

Zur Einsparung von Rechenzeit können die Exponenten d\_1 und d\_2 in (27) bzw. (28) vor der Durchführung der Exponentiation modulo $\phi(r)$ bzw. $\phi(s)$ reduziert werden.
Aus (23) und (25) folgt

$$z_1 = x^d \pmod{p} \tag{29}$$

Aus (24) und (26) folgt

$$z_2 = x^d \pmod{q}. \tag{30}$$

Nach dem Chinesischen Restwertsatz läßt sich aus $z_1$ und $z_2$ leicht eine Zahl z berechnen mit

$$z = z_1 \pmod{p \cdot r} \; ; \; z = z_2 \pmod{q \cdot s} \; ; \tag{31}$$

Selbst wenn r und s nicht teilerfremd sind, existiert eine solche Zahl z wegen $z_1 = C_1 = b_1{}^{d-1} = b_2{}^{d-2} = C_2 = z_2 \pmod{ggT(r,s)}$. Da p und q teilerfremd sind, folgt aus (29), (30) und (31):

$$z = x^d \pmod{p \cdot q}. \tag{32}$$

so daß sich die gesuchte Zahl z leicht aus den oben berechneten Werten ermitteln läßt.
Aus (21), (25) und (27) folgt

$$z_1 = C_1 \pmod{r} \tag{33}$$

Aus (22), (26) und (28) folgt

$$z_2 = C_2 \pmod{s}. \tag{34}$$

Durch Prüfung der Bedingungen (33) und (34) läßt sich ein Fehler mit hoher Wahrscheinlichkeit feststellen. Wenn eine der Bedingungen (33) oder (34) verletzt wird, ist das Ergebnis der modularen Exponentiation als fehlerbehaftet anzusehen und zu verwerfen.

Im Gegensatz zu dem Verfahren in Patentanspruch 8 der Druckschrift WO-A1-98/52319 sind die Zahlen $b_1$ und $b_2$ in der hier vorgestellten Variante des Verfahrens nicht von der Basis x abhängig. Typischerweise wird bei der Anwendung des RSA-Verfahrens oder des Rabin'schen Signaturverfahrens ein privater Schlüssel einmal in ein kryptographisches Gerät, z. B: in eine Chipkarte eingebracht, und anschließend mehrmals verwendet. Hierbei ist bei der in diesen Verfahren angewendeten modularen Exponentiation der Exponent d sowie der Modulus p·q jeweils ein fester Bestandteil des privaten Schlüssels. Infolgedessen müssen die Werte $C_1$ und $C_2$ nur einmal beim Einbringen des Schlüssels in das kryptographische Gerät berechnet werden, und können dann anschließend in dem Gerät abgespeichert werden. Das Abspeichern dieser Werte spart ggü. dem in der Druckschrift WO-A1-98/52319 vorgestellten Verfahren zwei modulare Exponentiationen.

Eine kryptographische Vorrichtung, beispielsweise eine Chipkarte, mit einer Zusatzhardware für die Beschleunigung der modularen Arithmetik enthält bei üblichen Ausführungsformen schnelle Addier- und/oder Multipliziereinheiten, während die bei der modularen Reduktion erforderliche Division durch eine lange Zahl nach üblichen Standardverfahren durchgeführt werden muß, wie sie beispielsweise aus Donald Knuth: "The Art of Computer Programming", Volume 2: Seminumerical Algorithms, 2. Ed., Addison-Wesley, 1981, bekannt sind. Eines von mehreren bekannten Verfahren zur Vereinfachung der Divisionsoperation besteht darin, den Modulus p vor der Exponentiation mit einer Zahl r zu multiplizieren, so daß die Binärdarstellung des Produktes p.r möglichst viele Einsen enthält; siehe beispielsweise Menezes et al. a.a.O., Seiten 598 bis 599. Die Division durch eine Zahl mit möglichst vielen führenden Einsen ist erheblich einfacher als die Division durch eine allgemeine Zahl.

Der Multiplikator r wird erfindungsgemäß so gewählt, daß d teilerfremd zu $\phi(r)$ ist. Bei der o.g. Variante der Erfindung ist diese Teilerfremdheit nicht erforderlich. Für jeden Modulus p gibt es einen von der jeweiligen technischen Implementierung der Division abhängigen optimalen Multiplikator $r_{opt}$. Falls der gewählte Wert von r geringfügig kleiner als das Optimum ist, enthält das Produkt p·r immer noch genügend viele führende Einsen, um die Division einfach gestalten zu können. Mit hoher Wahrscheinlichkeit ist die Zahl d teilerfremd zu mindestens einem der Werte $\phi(r_{opt}-i)$, wobei i =1, ..., k, wobei k eine von der Implementation abhängige kleine Zahl ist.

Wenn dies nicht der Fall ist, ersetze man r durch $2^i \cdot r$, wobei $2^i$ eine von der Implementierung abhängige geeignete Zweierpotenz ist.

Dieselben Substitutionen sind entsprechend auch auf den zweiten Primfaktor q anwendbar. Da die Multiplikatoren r (für p) und s (für q) unabhängig voneinander gewählt werden können, ist für den Multiplikator s ebenfalls eine entsprechende Wahl möglich.

**Patentansprüche**

1. Kryptographisches Verfahren in einer kryptographischen Vorrichtung,

   a) mit mindestens einem eine modulare Exponentiation E

$$E = x^d \pmod{p \cdot q}$$

   enthaltenden Rechenschritt mit einem ersten Primfaktor p, einem zweiten Primfaktor q, einem Exponenten d und einer Basis x, **dadurch gekennzeichnet, daß**
   b) zur Durchführung der modularen Exponentiation zwei natürliche Zahlen $r$ und s gewählt werden mit der Bedingung , daß d teilerfremd ist zu $\phi(kgV(r,s))$ und wobei die folgenden Rechenschritte durchgeführt werden:

$$x_1 = x \pmod{p \cdot r}$$

$$x_2 = x \pmod{q \cdot s}$$

$$d\_1 = d \pmod{\phi(p \cdot r)}$$

$$d\_2 = d \pmod{\phi(q \cdot s)}$$

$$z_1 = x_1^{d\_1} \pmod{p \cdot r}$$

$$z_2 = x_2^{d\_2} \pmod{q \cdot s},$$

   und wobei $\phi(.)$ die Euler'sche Funktion und kgV(r,s) das kleinste gemeinsame Vielfache von r und s darstellt,
   c) anschließend nach dem Chinesischen Restwertsatz aus $z_1$ und $z_2$ eine Zahl z berechnet wird mit $z = z_1 \pmod{p \cdot r}$ ; $z = z_2 \pmod{q \cdot s}$ ;
   d) das Ergebnis E der Exponentiation durch Reduktion von z modulo $p \cdot q$ berechnet wird
   e) die vorher berechnete Zahl z und damit das Ergebnis E in einem Prüfschritt auf Rechenfehler geprüft wird,
   f) der Prüfschritt folgende Rechenoperationen beinhaltet:

      f1) Berechnen der kleinstmöglichen natürlichen Zahl e mit der Eigenschaft $e \cdot d = 1 \pmod{\phi(kgV(r,s))}$ mit Hilfe des erweiterten Euklids'sehen Algorithmus
      f2) Berechnen des Wertes $C = z^e \pmod{kgV(r,s)}$
      f3) Vergleich der Werte x und C modulo kgV(r,s), wobei das Ergebnis der modularen Exponentiation E als fehlerhaft verworfen wird, wenn $x \neq C \pmod{kgV(r,s)}$.

2. Kryptographisches Verfahren in einer kryptographischen Vorrichtung,

   a) mit mindestens einer eine modulare Exponentiation E

$$E = x^d \pmod{p \cdot q}$$

enthaltenden Rechenschritt mit einem ersten Primfaktor p, einem zweiten Primfaktor q, einem Exponenten d und einer Basis x, **dadurch gekennzeichnet, daß**

b) zur Durchführung der modularen Exponentiation zwei natürliche Zahlen r und s , sowie zwei Zahlen $b_1$ und $b_2$ im Intervall [1,...,r-1] bzw. [1,...,s-1] und teilerfremd zu r bzw. s gewählt werden, und wobei $b_1$ und $b_2$ die Bedingung $b_1 = b_2$ (mod ggT(r,s)) erfüllen, wobei ggT(r,s) den größten gemeinsamen Teiler von r und s bezeichnet,

c) mit Hilfe dir beiden Zahlen $b_1$ und $b_2$ nach dem Chinesischen Restwertsatz Werte $x_1$ und $x_2$ berechnet werden, die die folgenden Bedingungen erfüllen:

$x_1 = x$ (mod p) , $x_1 = b_1$ (mod r)
$x_2 = x$(mod q) , $x_2 = b_2$ (mod s)

und anschließend folgende Rechenschritte durchgeführt werden:

$$d\_1 = d \ (\mathrm{mod}\ \phi(p))$$

$$d\_2 = d \ (\mathrm{mod}\ \phi(q))$$

$$z_1 = x_1^{\,d\_1} \ (\mathrm{mod}\ p.r)$$

$$z_2 = x_2^{\,d\_2} \ (\mathrm{mod}\ q{\cdot}s)$$

und $\phi(.)$ die Euler'sche Funktion und kgV(r,s) das kleinste gemeinsame Vielfache von r und s darstellt,

d) anschließend nach dem Chinesischen Restwertsatz aus $z_1$ und $z_2$ eine Zahl z berechnet wird mit $z = z_1$ (mod p·r) ; $z = z_2$ (mod q·s) ;

e) das Ergebnis E der Exponentiation durch Reduktion von z modulo p·q berechnet wird

f) die vorher berechnete Zahl z (und damit automatisch auch das Ergebnis E ) in einem Prüfschritt auf Rechenfehler geprüft wird,

g) der Prüfschritt folgende Rechenoperationen beinhaltet:

g1) Berechnen der Zahlen

$$C_1 = b_1^{\,d\_1} \ (\mathrm{mod}{\cdot}r)$$

$$C_2 = b_2^{\,d\_2} \ (\mathrm{mod}{\cdot}s)$$

wobei d_1 und d_2 vor der Durchführung der modularen Exponentiation modulo $\phi(r)$ bzw. $\phi(s)$ reduziert werden

g2) Vergleich der Werte $z_1$ und $C_1$ modulo r sowie $z_2$ und $C_2$ modulo s, wobei das Ergebnis der modularen Exponentiation E als fehlerhaft verworfen wird, wenn $C_1 \neq z_1$ mod r oder $C_2 \neq z_2$ mod s gilt.

3. Kryptographisches Verfahren nach Anspruch 2, **dadurch gekennzeichnet, daß** die Zahlen r und s ungerade sind.

4. Kryptographisches Verfahren nach Anspruch 1 bis 3, **dadurch gekennzeichnet, daß** die Zahlen r und s im Bereich [0, $2^k$-1] mit $16 \leq k \leq 32$ ausgewählt werden.

5. Kryptographisches Verfahren nach Anspruch 1 bis 4, **dadurch gekennzeichnet, daß** mindestens eine der Zahlen r und s so gewählt wird, daß die Binärdarstellung des Produktes p·r beziehungsweise q·s möglichst viele führende Einsen enthält.

6. Kryptographisches Verfahren nach einem der Ansprüche 1 bis 5, **dadurch gekennzeichnet, daß** beide Zahlen r und s so gewählt werden, daß die Binärdarstellung des Produktes p·r und des Produktes q·s möglichst viele führende Einsen enthalten.

**7.** Kryptographisches Verfahren nach einem der Ansprüche 5 oder 6, **dadurch gekennzeichnet, daß**

a) in einem ersten Teilschritt zunächst für mindestens eine der Zahlen r und s eine entsprechende optimale Zahl $r_{opt}$ beziehungsweise $s_{opt}$ ohne Beschränkung durch die Bedingung, gemäß der d teilerfremd zu $\phi$(kgV(r,s)) ist, ausgewählt wird, und
b) in einem zweiten Teilschritt jeweils ein benachbarter Wert r = $r_{opt}$-i beziehungsweise s = $s_{opt}$-i, i = 0,1, ..., k, ausgewählt wird, so daß d teilerfremd zu $\phi$(kgV(r,s)) ist.

**8.** Kryptographisches Verfahren nach einem der Ansprüche 5 oder 6, **dadurch gekennzeichnet, daß**

a) in einem ersten Teilschritt für jede der Zahlen r und s eine entsprechende optimale Zahl $r_{opt}$ beziehungsweise $s_{opt}$ ohne Beschränkung durch die Bedingung, gemäß der d teilerfremd zu $\phi$(kgV(r,s)) ist, ausgewählt wird, und
b) in einem zweiten Teilschritt jeweils ein Wert r = $2^1 \cdot r_{opt}$ beziehungsweise s = $2^1 \cdot s_{opt}$, 1 = 0,1, ..., j, ausgewählt wird, so daß d teilerfremd zu $\phi$(kgV(r,s)) ist.

**9.** Kryptographisches Verfahren nach einem der Ansprüche 5 oder 6, **dadurch gekennzeichnet, daß**

a) in einem ersten Teilschritt mindestens eine der Zahlen $r_{opt}$ und $s_{opt}$ zunächst ohne Beschränkung durch die Bedingung, gemäß der d teilerfremd zu $\phi$(kgV(r,s)) ist, ausgewählt wird,
b) in einem zweiten Teilschritt jeweils ein benachbarter Wert r = $r_{opt}$-i beziehungsweise s = $s_{opt}$-i, i = 0,1, ..., k, ausgewählt wird, so daß d teilerfremd zu $\phi$(kgV(r,s)) ist, falls ein solcher Wert für i = 0,1,..., k existiert, und
c) in einem dritten Teilschritt jeweils ein Wert r = $2^1 \cdot r_{opt}$ beziehungsweise s = $2^1 \cdot s_{opt}$, i = 0,1, ..., j, ausgewählt wird, so daß d teilerfremd zu $\phi$(kgV(r,s)) ist, falls im zweiten Teilschritt kein Wert ausgewählt worden ist.

**10.** Kryptographisches Verfahren nach einem der vorstehenden Ansprüche, **dadurch gekennzeichnet, daß** es das RSA-Verfahren beinhaltet.

**11.** Kryptographisches Verfahren nach einem der vorstehenden Ansprüche, **dadurch gekennzeichnet, daß** es das Rabin'sche-Signaturen-Verfahren beinhaltet.

**12.** Kryptographisches Verfahren nach einem der vorstehenden Ansprüche, **dadurch gekennzeichnet, daß** es das Fiat-Shamir'sche Identifikationsschema-Verfahren beinhaltet.

**13.** Kryptographische Vorrichtung,

a) mit mindestens einer Exponentiationseinrichtung, die einen eine modulare Exponentiation E

$$E = x^d \ (\text{mod } p \cdot q)$$

enthaltenden Rechenschritt mit einem ersten Primfaktor p, einem zweiten Primfaktor q, einem Exponenten d und einer Basis x ausführt, **dadurch gekennzeichnet, daß**
b) zur Durchführung der modularen Exponentiation zwei natürliche Zahlen r und s gewählt werden mit der Bedingung, daß d teilerfremd ist zu $\phi$(kgV(r,s)) und wobei die folgenden Rechenschritte durchgeführt werden:

$$x_1 = x \ (\text{mod } p.r)$$

$$x_2 = x \ (\text{mod } q \cdot s)$$

$$d\_1 = d \ (\text{mod } \phi(p \cdot r))$$

$$d\_2 = d \ (\text{mod } \phi(q \cdot s))$$

$$z_1 = x_1^{\ d\_1} \ (\text{mod } p{\cdot}r)$$

$$z_2 = x_2^{\ d\_2} \ (\text{mod } q{\cdot}s),$$

und $\phi(.)$ die Euler'sche Funktion und kgV(r,s) das kleinste gemeinsame Vielfache von r und s darstellt,
c) anschließend nach dem Chinesischen Restwertsatz aus $z_1$ und $z_2$ eine Zahl z berechnet wird mit $z = z_1$ (mod p·r) ; $z = z_2$ (mod q·s) ;
d) das Ergebnis E der Exponentiation durch Reduktion von z modulo p·q berechnet wird
e) die vorher berechnete Zahl z (und damit automatisch auch das Ergebnis E ) in einem Prüfschritt auf Rechenfehler geprüft wird,
f) der Prüfschritt folgende Rechenoperationen beinhaltet:

    f1) Berechnen der kleinstmöglichen natürlichen Zahl e mit der Eigenschaft $e{\cdot}d = 1$ (mod $\phi$(kgV(r,s))) mit Hilfe des erweiterten Euklid'schen Algorithmus
    f2) Berechnen des Wertes $C = z^e$ (mod kgV(r,s))
    f3) Vergleich der Werte x und C modulo kgV(r,s), wobei das Ergebnis der modularen Exponentiation E als fehlerhaft verworfen wird, wenn $x \neq C$ (mod kgV(r,s)).

**14.** Kryptographische Vorrichtung,

    a) mit mindestens einer Exponentiationseinrichtung, die einen eine modulare Exponentiation E

$$E = x^d \ (\text{mod } p{\cdot}q)$$

enthaltenden Rechenschritt mit einem ersten Primfaktor p, einem zweiten Primfaktor q, einem Exponenten d und einer Basis x ausführt, **dadurch gekennzeichnet, daß**
b) zur Durchführung der modularen Exponentiation zwei natürliche Zahlen r und s , sowie zwei Zahlen $b_1$ und $b_2$ im Intervall [1,...,r-1] bzw. [1,...,s-1] und teilerfremd zu r bzw. s gewählt werden, und wobei $b_1$ und $b_2$ die Bedingung $b_1 = b_2$ (mod ggT(r,s)) erfüllen, wobei ggT(r,s) den größten gemeinsamen Teiler von r und s bezeichnet,
c) mit Hilfe dir beiden Zahlen $b_1$ und $b_2$ nach dem Chinesischen Restwertsatz Werte $x_1$ und $x_2$ berechnet werden, die die folgenden Bedingungen erfüllen:

    $x_1 = x$ (mod p) , $x_1 = b_1$ (mod r)
    $x_2 = x$ (mod q) , $x_2 = b_2$ (mod s)

und anschließend folgende Rechenschritte durchgeführt werden:

$$d\_1 = d \ (\text{mod } \phi(p))$$

$$d\_2 = d \ (\text{mod } \phi(q))$$

$$z_1 = x_1^{\ d\_1} \ (\text{mod } p{\cdot}r)$$

$$z_2 = x_2^{\ d\_2} \ (\text{mod } q{\cdot}s)$$

und wobei $\phi(.)$ die Euler'sche Funktion und kgV(r,s) das kleinste gemeinsame Vielfache von r und s darstellt,
d) anschließend nach dem Chinesischen Restwertsatz aus $z_1$ und $z_2$ eine Zahl z berechnet wird mit $z = z_1$ (mod p·r) ; $z = z_2$ (mod q·s) ;
e) das Ergebnis E der Exponentiation durch Reduktion von z modulo p·q berechnet wird
f) die vorher berechnete Zahl z (und damit automatisch auch das Ergebnis E ) in einem Prüfschritt auf Rechenfehler geprüft wird,

g) der Prüfschritt folgende Rechenoperationen beinhaltet:

g1) Berechnen der Zahlen

$$C_1 = b_1^{\ d\_1} \ (\text{mod} \cdot r)$$

$$C_2 = b_2^{\ d\_2} \ (\text{mod} \cdot s)$$

wobei $d\_1$ und $d\_2$ vor der Durchführung der modularen Exponentiation modulo $\phi(r)$ bzw. $\phi(s)$ reduziert werden,

g2) Vergleich der Werte $z_1$ und $C_1$ modulo r sowie $z_2$ und $C_2$ modulo s, wobei das Ergebnis der modularen Exponentiation E als fehlerhaft verworfen wird, wenn $C_1 \neq z_1$ mod r oder $C_2 \neq z_2$ mod s gilt.

**15.** Kryptographische Vorrichtung nach Anspruch 14, **dadurch gekennzeichnet, daß** die Zahlen r und s ungerade sind.

**16.** Kryptographische Vorrichtung nach Anspruch 13 bis 15, **dadurch gekennzeichnet, daß** die Zahlen r und s im Bereich $[0, 2^k\text{-}1]$ mit $16 \leq k \leq 32$ ausgewählt werden.

**17.** Kryptographische Vorrichtung nach Anspruch 13 bis 16, **dadurch gekennzeichnet, daß** mindestens eine der Zahlen r und s so gewählt wird, daß die Binärdarstellung des Produktes p·r beziehungsweise q·s möglichst viele führende Einsen enthält.

**18.** Kryptographische Vorrichtung nach einem der Ansprüche 13 bis 17, **dadurch gekennzeichnet, daß** beide Zahlen r und s so gewählt werden, daß die Binärdarstellung des Produktes p·r und des Produktes q·s möglichst viele führende Einsen enthalten.

**19.** Kryptographische Vorrichtung nach einem der Ansprüche 17 oder 18, **dadurch gekennzeichnet, daß**

a) in einem ersten Teilschritt zunächst für mindestens eine der Zahlen r und s eine entsprechende optimale Zahl $r_{opt}$ beziehungsweise $s_{opt}$ ohne Beschränkung durch die Bedingung, gemäß der d teilerfremd zu $\phi(kgV(r,s))$ ist, ausgewählt wird, und

b) in einem zweiten Teilschritt jeweils ein benachbarter Wert $r = r_{opt}\text{-}i$ beziehungsweise $s = s_{opt}\text{-}i$, i = 0,1, ..., k, ausgewählt wird, so daß d teilerfremd zu $\phi(kgV(r,s))$ ist.

**20.** Kryptographische Vorrichtung nach einem der Ansprüche 17 oder 18, **dadurch gekennzeichnet, daß**

a) in einem ersten Teilschritt für jede der Zahlen r und s eine entsprechende optimale Zahl $r_{opt}$ beziehungsweise $s_{opt}$ ohne Beschränkung durch die Bedingung, gemäß der d teilerfremd zu $\phi(kgV(r,s))$ ist, ausgewählt wird, und

b) in einem zweiten Teilschritt jeweils ein Wert $r = 2^1 \cdot r_{opt}$ beziehungsweise $s = 2^1 \cdot s_{opt}$, 1= 0,1, ..., j, ausgewählt wird, so daß d teilerfremd zu $\phi(kgV(r,s))$ ist.

**21.** Kryptographische Vorrichtung nach einem der Ansprüche 17 oder 18, **dadurch gekennzeichnet, daß**

a) in einem ersten Teilschritt mindestens eine der Zahlen $r_{opt}$ und $s_{opt}$ zunächst ohne Beschränkung durch die Bedingung, gemäß der d teilerfremd zu $\phi(kgV(r,s))$ ist, ausgewählt wird,

b) in einem zweiten Teilschritt jeweils ein benachbarter Wert $r = r_{opt}\text{-}i$ beziehungsweise $s = s_{opt}\text{-}i$, i = 0,1, ..., k, ausgewählt wird, so daß d teilerfremd zu $\phi(kgV(r,s))$ ist, falls ein solcher Wert für i = 0,1,..., k existiert, und

c) in einem dritten Teilschritt jeweils ein Wert $r = 2^1 \cdot r_{opt}$ beziehungsweise $s = 2^1 \cdot s_{opt}$, i = 0,1, ..., j, ausgewählt wird, so daß d teilerfremd zu $\phi(kgV(r,s))$ ist, falls im zweiten Teilschritt kein Wert ausgewählt worden ist.

**22.** Kryptographische Vorrichtung nach einem der vorstehenden Ansprüche, **dadurch gekennzeichnet, daß** es das RSA-Verfahren beinhaltet.

**23.** Kryptographische Vorrichtung nach einem der vorstehenden Ansprüche, **dadurch gekennzeichnet, daß** es das Rabin'sche-Signaturen-Verfahren beinhaltet.

**24.** Kryptographische Vorrichtung nach einem der vorstehenden Ansprüche, **dadurch gekennzeichnet, daß** es das Fiat-Shamir'sche Identifikationsschema-Verfahren beinhaltet.

**Claims**

**1.** A cryptographic method in a cryptographic apparatus

a) with at least one computing step containing a modular exponentiation $E$

$$E = x^d \ (\text{mod } p \cdot q)$$

with a first prime factor $p$, a second prime factor $q$, an exponent $d$ and a base $x$, **characterized in that**
b) for carrying out the modular exponentiation two natural numbers $r$ and $s$ are chosen with the condition that $d$ is relatively prime to $\varphi(kgV(r,s))$, and whereby the following computing steps are performed:

$$x_1 = x \ (\text{mod } p \cdot r)$$

$$x_2 = x \ (\text{mod } q \cdot s)$$

$$d\_1 = d \ (\text{mod } \varphi(p \cdot r))$$

$$d\_2 = d \ (\text{mod } \varphi(q \cdot s))$$

$$z_1 = x_1^{\ d\_1} \ (\text{mod } p \cdot r)$$

$$z_2 = x_2^{\ d\_2} \ (\text{mod } q \cdot s)$$

and whereby $\varphi(.)$ is the Eulerian function and $kgV(r,s)$ is the smallest common multiple of $r$ and $s$,
c) then a number $z$ is calculated according to the Chinese Remainder Theorem from $z_1$ and $z_2$ with $z = z_1$ (mod $p \cdot r$) ; $z = z_2$ (mod $q \cdot s$) ;
d) the result $E$ of the exponentiation is calculated by reduction of $z$ modulo $p \cdot q$,
e) the previously calculated number $z$ and thus the result $E$ is checked for computing errors in a checking step,
f) the checking step comprises the following computing operations:

f1) calculating the smallest possible natural number $e$ with the property $e \cdot d = 1$ (mod $\varphi(kgV(r,s))$) with the aid of the Extended Euclidean Algorithm,
f2) calculating the value $C = z^e$ (mod $kgV(r,s)$),
f3) comparing the values $x$ and $C$ modulo $kgV(r,s)$, whereby the result of the modular exponentiation $E$ is rejected as faulty if $x \ne C$ (mod $kgV(r,s)$).

**2.** A cryptographic method in a cryptographic apparatus

a) with at least one computing step containing a modular exponentiation $E$

$$E = x^d \ (\text{mod } p \cdot q)$$

with a first prime factor $p$, a second prime factor $q$, an exponent $d$ and a base $x$, **characterized in that**

b) for carrying out the modular exponentiation two natural numbers $r$ and $s$, and two numbers $b_1$ and $b_2$ in the interval $[1,...,r\text{-}1]$ and $[1,...,s\text{-}1]$ and relatively prime to $r$ and $s$, respectively, are chosen, and whereby $b_1$ and $b_2$ fulfill the condition $b_1 = b_2$ (mod $ggT(r,s)$), where $ggT(r,s)$ designates the greatest common divisor of $r$ and $s$,

c) the two numbers $b_1$ and $b_2$ are used to calculate according to the Chinese Remainder Theorem values $x_1$ and $x_2$ fulfilling the following conditions:

$$x_1 = x \text{ (mod } p), \ x_1 = b_1 \text{ (mod } r)$$
$$x_2 = x \text{ (mod } q), \ x_2 = b_2 \text{ (mod } s)$$

and then the following computing steps are performed:

$$d\_1 = d \text{ (mod } \varphi(p))$$

$$d\_2 = d \text{ (mod } \varphi(q))$$

$$z_1 = x_1^{\,d\_1} \text{ (mod } p \cdot r)$$

$$z_2 = x_2^{\,d\_2} \text{ (mod q} \cdot \text{s)}$$

and $\varphi(.)$ represents the Eulerian function and $kgV(r,s)$ the smallest common multiple of $r$ and $s$,

d) then a number $z$ is calculated from $z_1$ and $z_2$ according to the Chinese Remainder Theorem with $z = z_1$ (mod $p \cdot r$) ; $z = z_2$ (mod $q \cdot s$) ;

e) the result $E$ of the exponentiation is calculated by reduction of $z$ modulo $p \cdot q$,

f) the previously calculated number $z$ (and thus automatically also the result $E$) is checked for computing errors in a checking step,

g) the checking step comprises the following computing operations:

g1) calculating the numbers

$$C_1 = b_1^{\,d\_1} \text{ (mod} \cdot r)$$

$$C_2 = b_2^{\,d\_2} \text{ (mod} \cdot s)$$

whereby $d\_1$ and $d\_2$ are reduced before carrying out the modular exponentiation modulo $\varphi(r)$ and $\varphi(s)$, respectively,

g2) comparing the values $z_1$ and $C_1$ modulo $r$ as well as $z_2$ and $C_2$ modulo $s$, whereby the result of the modular exponentiation $E$ is rejected as faulty if $C_1 \neq z_1$ mod $r$ or $C_2 \neq z_2$ mod $s$ holds.

**3.** A cryptographic method according to claim 2, **characterized in that** the numbers $r$ and $s$ are odd.

**4.** A cryptographic method according to claims 1 to 3, **characterized in that** the numbers $r$ and $s$ are selected in the range of $[0, 2^k\text{-}1]$ with $16 \leq k \leq 32$.

**5.** A cryptographic method according to claims 1 to 4, **characterized in that** at least one of the numbers $r$ and $s$ is chosen so that the binary representation of the product $p \cdot r$ or $q \cdot s$ contains as many leading ones as possible.

**6.** A cryptographic method according to any of claims 1 to 5, **characterized in that** both numbers $r$ and $s$ are chosen so that the binary representation of the product $p \cdot r$ and the product $q \cdot s$ contain as many leading ones as possible.

**7.** A cryptographic method according to one of claims 5 and 6, **characterized in that**

a) in a first partial step, corresponding optimal numbers $r_{opt}$ and $s_{opt}$ are first selected for at least one of the numbers $r$ and $s$, respectively, without limitation by the condition that $d$ is relatively prime to $\varphi(kgV(r,s))$, and
b) in a second partial step, adjacent values $r = r_{opt}-i$ and $s = s_{opt}-i$, $i = 0, 1, ..., k$, are selected so that $d$ is relatively prime to $\varphi(kgV(r,s))$.

**8.** A cryptographic method according to one of claims 5 and 6, **characterized in that**

a) in a first partial step, corresponding optimal numbers $r_{opt}$ and $s_{opt}$ are selected for each of the numbers $r$ and $s$, respectively, without limitation by the condition that $d$ is relatively prime to $\varphi(kgV(r,s))$, and
b) in a second partial step, values $r = 2^l \cdot r_{opt}$ and s $= 2^l \cdot s_{opt}$, $l = 0, 1, ...,j$, are selected so that $d$ is relatively prime to $\varphi(kgV(r,s))$.

**9.** A cryptographic method according to one of claims 5 and 6, **characterized in that**

a) in a first partial step, at least one of the numbers $r_{opt}$ and $s_{opt}$ is first selected without limitation by the condition that $d$ is relatively prime to $\varphi(kgV(r,s))$,
b) in a second partial step, adjacent values $r = r_{opt}-i$ and $s = s_{opt}-i$, $i = 0, 1,..., k$, are selected so that $d$ is relatively prime to $\varphi(kgV(r,s))$ if such a value exists for $i = 0, 1,..., k$, and
c) in a third partial step, values $r = 2^l \cdot r_{opt}$ and $s = 2^l \cdot s_{opt}$, $i = 0, 1,...,j$, are selected so that $d$ is relatively prime to $\varphi(kgV(r,s))$ if no value was selected in the second partial step.

**10.** A cryptographic method according to any of the above claims, **characterized in that** it comprises the RSA method.

**11.** A cryptographic method according to any of the above claims, **characterized in that** it comprises the Rabin signature scheme.

**12.** A cryptographic method according to any of the above claims, **characterized in that** it comprises the Fiat-Shamir identification scheme.

**13.** A cryptographic apparatus

a) with at least one exponentiation device executing a computing step containing a modular exponentiation $E$

$$E = x^d \pmod{p \cdot q}$$

with a first prime factor $p$, a second prime factor $q$, an exponent $d$ and a base $x$, **characterized in that**
b) for carrying out the modular exponentiation two natural numbers $r$ and $s$ are chosen with the condition that $d$ is relatively prime to $\varphi(kgV(r,s))$, and whereby the following computing steps are performed:

$$x_1 = x \pmod{p \cdot r}$$

$$x_2 = x \pmod{q \cdot s}$$

$$d\_1 = d \pmod{\varphi(p \cdot r)}$$

$$d\_2 = d \pmod{\varphi(q \cdot s)}$$

$$z_1 = x_1^{d\_1} \pmod{p \cdot r}$$

$$z_2 = x_2^{d\_2} \pmod{q \cdot s}$$

and $\varphi(.)$ is the Eulerian function and $kgV(r,s)$ is the smallest common multiple of $r$ and $s$,

c) then a number $z$ is calculated from $z_1$ and $z_2$ according to the Chinese Remainder Theorem with $z = z_1$ (mod $p \cdot r$) ; $z = z_2$ (mod $q \cdot s$) ;

d) the result $E$ of the exponentiation is calculated by reduction of $z$ modulo $p \cdot q$,

e) the previously calculated number $z$ (and thus automatically also the result $E$) is checked for computing errors in a checking step,

f) the checking step comprises the following computing operations:

f1) calculating the smallest possible natural number e with the property $e \cdot d = 1$ (mod $\varphi(kgV(r,s))$) with the aid of the Extended Euclidean Algorithm,

f2) calculating the value $C = z^e$ (mod $kgV(r,s)$),

f3) comparing the values $x$ and $C$ modulo $kgV(r,s)$, whereby the result of the modular exponentiation $E$ is rejected as faulty if $x \neq C$ (mod $kgV(r,s)$).

**14.** A cryptographic apparatus

a) with at least one exponentiation device executing a computing step containing a modular exponentiation $E$

$$E = x^d \ (\text{mod } p \cdot q)$$

with a first prime factor $p$, a second prime factor $q$, an exponent $d$ and a base $x$, **characterized in that**

b) for carrying out the modular exponentiation two natural numbers $r$ and $s$, and two numbers $b_1$ and $b_2$ in the interval $[1,...,r\text{-}1]$ and $[1,...,s\text{-}1]$ and relatively prime to $r$ and $s$, respectively, are chosen, and whereby $b_1$ and $b_2$ fulfill the condition $b_1 = b_2$ (mod $ggT(r,s)$), where $ggT(r,s)$ designates the greatest common divisor of $r$ and $s$,

c) the two numbers $b_1$ and $b_2$ are used to calculate according to the Chinese Remainder Theorem values $x_1$ and $x_2$ fulfilling the following conditions:

$x_1 = x$ (mod $p$), $x_1 = b_1$ (mod $r$)

$x_2 = x$ (mod $q$), $x_2 = b_2$ (mod $s$)

and then the following computing steps are performed:

$$d\_1 = d \ (\text{mod } \varphi(p))$$

$$d\_2 = d \ (\text{mod } \varphi(q))$$

$$z_1 = x_1^{\,d\_1} \ (\text{mod } p \cdot r)$$

$$z_2 = x_2^{\,d\_2} \ (\text{mod } q \cdot s)$$

and whereby $\varphi(.)$ represents the Eulerian function and $kgV(r,s)$ the smallest common multiple of $r$ and $s$,

d) then a number $z$ is calculated from $z_1$ and $z_2$ according to the Chinese Remainder Theorem with $z = z_1$ (mod $p \cdot r$); $z = z_2$ (mod $q \cdot s$) ;

e) the result $E$ of the exponentiation is calculated by reduction of $z$ modulo $p \cdot q$,

f) the previously calculated number $z$ (and thus automatically also the result $E$) is checked for computing errors in a checking step,

g) the checking step comprises the following computing operations:

g1) calculating the numbers

$$C_1 = b_1^{\,d\_1} \ (\text{mod} \cdot r)$$

$$C_2 = b_2^{\ d\_2} \ (\text{mod} \cdot s)$$

whereby $d\_1$ and $d\_2$ are reduced before carrying out the modular exponentiation modulo $\varphi(r)$ and $\varphi(s)$, respectively,

g2) comparing the values $z_1$ and $C_1$ modulo $r$ as well as $z_2$ and $C_2$ modulo $s$, whereby the result of the modular exponentiation $E$ is rejected as faulty if $C_1 \neq z_1 \bmod r$ or $C_2 \neq z_2 \bmod s$ holds.

**15.** A cryptographic apparatus according to claim 14, **characterized in that** the numbers $r$ and $s$ are odd.

**16.** A cryptographic apparatus according to claims 13 to 15, **characterized in that** the numbers $r$ and $s$ are selected in the range of $[0, 2^k\text{-}1]$ with $16 \leq k \leq 32$.

**17.** A cryptographic apparatus according to claims 13 to 16, **characterized in that** at least one of the numbers $r$ and $s$ is chosen so that the binary representation of the product $p \cdot r$ or $q \cdot s$ contains as many leading ones as possible.

**18.** A cryptographic apparatus according to any of claims 13 to 17, **characterized in that** both numbers $r$ and $s$ are chosen so that the binary representation of the product $p \cdot r$ and the product $q \cdot s$ contain as many leading ones as possible.

**19.** A cryptographic apparatus according to one of claims 17 and 18, **characterized in that**

a) in a first partial step, corresponding optimal numbers $r_{opt}$ and $s_{opt}$ are first selected for at least one of the numbers $r$ and $s$, respectively, without limitation by the condition that $d$ is relatively prime to $\varphi(kgV(r,s))$, and

b) in a second partial step, adjacent values $r = r_{opt}\text{-}i$ and $s = s_{opt}\text{-}i$, $i = 0, 1, ..., k,$ are selected so that $d$ is relatively prime to $\varphi(kgV(r,s))$.

**20.** A cryptographic apparatus according to one of claims 17 and 18, **characterized in that**

a) in a first partial step, corresponding optimal numbers $r_{opt}$ and $s_{opt}$ are selected for each of the numbers $r$ and $s$, respectively, without limitation by the condition that $d$ is relatively prime to $\varphi(kgV(r,s))$, and

b) in a second partial step, values $r = 2^l \cdot r_{opt}$ and $s = 2^l \cdot s_{opt}$, $l = 0, 1, ..., j,$ are selected so that $d$ is relatively prime to $\varphi(kgV(r,s))$.

**21.** A cryptographic apparatus according to one of claims 17 and 18, **characterized in that**

a) in a first partial step, at least one of the numbers $r_{opt}$ and $s_{opt}$ is first selected without limitation by the condition that $d$ is relatively prime to $\varphi(kgV(r,s))$,

b) in a second partial step, adjacent values $r = r_{opt}\text{-}i$ and $s = s_{opt}\text{-}i$, $i = 0, 1,..., k$, are selected so that $d$ is relatively prime to $\varphi(kgV(r,s))$ if such a value exists for $i = 0, 1,..., k$, and

c) in a third partial step, values $r = 2^l \cdot r_{opt}$ and $s = 2^l \cdot s_{opt}$, $i = 0, 1, ..., j,$ are selected so that $d$ is relatively prime to $\varphi(kgV(r,s))$ if no value was selected in the second partial step.

**22.** A cryptographic apparatus according to any of the above claims, **characterized in that** it comprises the RSA method.

**23.** A cryptographic apparatus according to any of the above claims, **characterized in that** it comprises the Rabin signature scheme.

**24.** A cryptographic apparatus according to any of the above claims, **characterized in that** it comprises the Fiat-Shamir identification scheme.

**Revendications**

**1.** Procédé cryptographique dans un dispositif cryptographique,

a) comportant au moins une étape de calcul comprenant une exponentiation modulaire E :

$$E = x^d \ (\text{mod } p.q)$$

avec un premier facteur premier p, un second facteur premier q, un exposant d et une base x,
**caractérisé en ce que**
b) pour effectuer l'exponentiation modulaire, deux nombres naturels r et s sont choisis à condition que d soit premier par rapport à $\Phi(kgV(r,s))$ et, dans lequel les étapes de calcul suivantes sont effectuées :

$$x_1 = x \ (\text{mod } p.r)$$

$$x_2 = x \ (\text{mod } q.s)$$

$$d\_1 = d \ (\text{mod } \Phi(p.r))$$

$$d\_2 = d \ (\text{mod } \Phi(q.s))$$

$$z_1 : x_1^{d\_1} \ (\text{mod } p.r)$$

$$z_2 = x_2^{d\_2} \ (\text{mod } q.s),$$

$\Phi(.)$ représentant la fonction d'Euler et $kgV(r,s)$ le plus petit multiple commun de r et s ;
c) ensuite, d'après le "groupe chinois de valeurs résiduelles", un nombre z est calculé à partir de $z_1$ et $z_2$ avec $z = z_1 \ (\text{mod } p.r)$ et $z = z_2 \ (\text{mod } (q.s)$ ;
d) le résultat E de l'exponentiation est calculé par réduction de z modulo $p \cdot q$ ;
e) le nombre z calculé au préalable et conséquemment le résultat E est vérifié, dans une étape de vérification, du point de vue des erreurs de calcul ;
f) l'étape de vérification contient les opérations de calcul suivantes :

f1) calcul du nombre naturel le plus petit possible e, ayant la propriété $e.d = 1 \ (\text{mod } \Phi(kgV(r,s))$, à l'aide de l'algorithme d'Euclide élargi ;
f2) calcul de la valeur $C = z^e \ (\text{mod } kgV(r,s))$ ;
f3) comparaison des valeurs x et C modulo $kgV(r,s)$, le résultat de l'exponentiation modulaire E étant rejeté comme entaché d'erreur lorsque $x \neq C \ (\text{mod } kgV(r,s))$.

2. Procédé cryptographique dans un dispositif cryptographique,

a) comportant au moins une étape de calcul comprenant une exponentiation modulaire E :

$$E = x^d \ (\text{mod } p.q)$$

avec un premier facteur premier p, un second facteur premier q, un exposant d et une base x,
**caractérisé en ce que**
b) pour effectuer l'exponentiation modulaire on choisit deux nombres naturels r et s, ainsi que deux nombres $b_1$ et $b_2$, respectivement compris dans l'intervalle $[1,...,r-1]$ et $[1,...,s-1]$ et respectivement premiers par rapport à r et s, $b_1$ et $b_2$ satisfaisant à la condition $b_1 = b_2 \ (\text{mod } ggT(r,s))$ où $ggTr(s)$ désigne le plus grand dénominateur commun de r et s ;
c) à l'aide des deux nombres $b_1$ et $b_2$, on calcule, d'après le groupe chinois de valeurs résiduelles, les valeurs $x_1$ et $x_2$ qui satisfont aux conditions suivantes :

$x_1 = x \ (\text{mod } p)$ ; $x_1 = b_1 \ (\text{mod } r)$
$x_2 = x \ (\text{mod } q)$ ; $x_2 = b_2 \ (\text{mod } s)$

et l'on effectue ensuite les étapes de calcul suivantes :

$$d\_1 = d \ (\mathrm{mod} \ \Phi(p))$$

$$d\_2 = d \ (\mathrm{mod} \ \Phi(q)$$

$$z_1 = x_1^{d\_1} \ (\mathrm{mod} \ p.r)$$

$$z_2 = x_2^{d\_2} \ (\mathrm{mod} \ q.s),$$

$\Phi(.)$ représentant la fonction d'Euler et kgV(r,s) le plus petit multiple commun de r et s ;

d) ensuite, d'après le groupe chinois de valeurs résiduelles, un nombre z est calculé à partir de $z_1$ et $z_2$ avec $z = z_1$ (mod p.r) et $z = z_2$ (mod (q.s) ;

e) le résultat E de l'exponentiation est calculé par réduction de z modulo p·q;

f) le nombre z calculé au préalable (et donc aussi, de manière automatique, le résultat E) est vérifié, dans une étape de vérification, du point de vue des erreurs de calcul ;

g) l'étape de vérification contient les opérations de calcul suivantes :

g1) calcul des nombres

$$C_1 = b_1^{d\_1} \ (\mathrm{mod}.r)$$

$$C_2 = b^{2^{d\_2}} \ (\mathrm{mod}.s)$$

où $d\_1$ et $d\_2$ sont réduits avant d'effectuer l'exponentiation modulaire modulo $\Phi(r)$ ou $\Phi(s)$;

g2) comparaison des valeurs $z_1$ et $C_1$ modulo r, ainsi que $z_2$ et $C_2$ modulo s, en rejetant comme entaché d'erreur le résultat de l'exponentiation modulaire E lorsque l'on a $C_1 \neq z_1$ mod r ou $C_2 \neq z_2$ mod s.

3. Procédé cryptographique selon la revendication 2, **caractérisé en ce que** les nombres r et s sont impairs.

4. Procédé cryptographique selon les revendications 1 à 3, **caractérisé en ce que** les nombres r et s sont sélectionnés dans le domaine [0, $2^k$-1] avec $16 \leq k \leq 2$.

5. Procédé cryptographique selon les revendications 1 à 4, **caractérisé en ce qu'**au moins l'un des nombres r et s est choisi de manière que la représentation binaire du produit p.r ou q.s, respectivement, contienne le plus grand nombre possible de "un" directeurs.

6. Procédé cryptographique selon les revendications 1 à 5, **caractérisé en ce que** les deux nombres r et s sont choisis de manière que la représentation binaire du produit p.r et du produit q.s contienne le plus grand nombre possible de "un" directeurs.

7. Procédé cryptographique selon l'une quelconque des revendications 5 ou 6, **caractérisé en ce que** :

a) dans une première étape partielle on sélectionne pour au moins l'un des nombres r et s un nombre optimal correspondant, $r_{opt}$ ou $s_{opt}$ respectivement, sans limitation due à la condition suivant laquelle d est choisi relativement premier par rapport à $\Phi(kgV(r,s))$ ;

b) dans une seconde étape partielle on sélectionne une valeur voisine $r = r_{opt} - i$ ou $s = s_{opt} - i$ respectivement, avec i = 0, 1, ..., k, de telle sorte que d est relativement premier par rapport à $\Phi(kgV(r,s))$.

8. Procédé cryptographique selon l'une quelconque des revendications 5 ou 6, **caractérisé en ce que** :

a) dans une première étape partielle on sélectionne pour chacun des nombres r et s un nombre optimal cor-

respondant, $r_{opt}$ et $s_{opt}$ respectivement, sans limitation due à la condition suivant laquelle d est choisi relativement premier par rapport à $\Phi(kgV(r,s))$ ;
b) dans une seconde étape partielle on sélectionne une valeur r = $2^1.r_{opt}$ ou s= $2^1.s_{opt}$ respectivement, avec 1 = 0, 1, ..., j, de telle sorte que d est relativement premier par rapport à $\Phi(kgV(r,s))$.

**9.** Procédé cryptographique selon l'une quelconque des revendications 5 ou 6, **caractérisé en ce que** :

a) dans une première étape partielle on sélectionne au moins l'un des nombres $r_{opt}$ et $s_{opt}$ tout d'abord sans limitation due à la condition suivant laquelle d est choisi relativement premier par rapport à $\Phi(kgV(r,s))$ ;
b) dans une seconde étape partielle on sélectionne une valeur voisine r = $r_{opt}$ - i ou s= $s_{opt}$ - i respectivement, avec i = 0, 1, ..., k, de telle sorte que d est relativement premier par rapport à $\Phi(kgV(r,s))$, pour autant qu'une telle valeur existe pour i = 0, 1,..., k ;
c) dans une troisième étape partielle on sélectionne une valeur r = $2^1.r_{opt}$ ou s= $2^1.s_{opt}$ respectivement, avec 1 = 0, 1, ..., j, de telle sorte que d est relativement premier par rapport à $\Phi(kgV(r,s))$, dans le cas où aucune valeur n'a été sélectionnée dans la seconde étape partielle.

**10.** Procédé cryptographique selon l'une quelconque des revendications précédentes, **caractérisé en ce qu'**il contient le procédé RSA.

**11.** Procédé cryptographique selon l'une quelconque des revendications précédentes, **caractérisé en ce qu'**il contient le procédé des signatures de Rabin.

**12.** Procédé cryptographique selon l'une quelconque des revendications précédentes, **caractérisé en ce qu'**il contient le procédé du schéma d'identification de Fiat-Shamir.

**13.** Dispositif cryptographique,

a) comportant au moins un dispositif d'exponentiation qui effectue une étape de calcul contenant une exponentiation modulaire E :

$$E = x^d \pmod{p.q}$$

avec un premier facteur premier p, un second facteur premier q, un exposant d et une base x,
**caractérisé en ce que**
b) pour effectuer l'exponentiation modulaire, deux nombres naturels r et s sont choisis avec la condition que d est premier par rapport à $\Phi kgV(r,s)$) et en effectuant les étapes de calcul suivantes :

$$x_1 = x \pmod{p.r}$$

$$x_2 = x \pmod{q.s}$$

$$d\_1 = d \pmod{\Phi(p.r)}$$

$$d\_2 = d \pmod{\Phi(q.s)}$$

$$z_1 : x_1^{d\_1} \pmod{p.r}$$

$$z_2 = x_2^{d\_2} \pmod{q.s},$$

$\Phi(.)$ représentant la fonction d'Euler et $kgV(r,s)$ le plus petit multiple commun de r et s ;
c) ensuite, d'après le groupe chinois de valeurs résiduelles, un nombre z est calculé à partir de $z_1$ et $z_2$ avec

$z = z_1$ (mod p.r) et $z = z_2$ (mod (q.s) ;

d) le résultat E de l'exponentiation est calculé par réduction de z modulo p·q ;

e) le nombre z calculé au préalable (et conséquemment aussi, de manière automatique, le résultat E) est vérifié, dans une étape de vérification, du point de vue des erreurs de calcul ;

f) l'étape de vérification contient les opérations de calcul suivantes :

f1) calcul du nombre naturel le plus petit possible e, ayant la propriété e.d = 1 (mod $\Phi$(kgV(r,s)), à l'aide de l'algorithme d'Euclide élargi ;

f2) calcul de la valeur C= $z^e$ (mod kgV(r,s)) ;

f3) comparaison des valeurs x et C modulo kgV(r,s), le résultat de l'exponentiation modulaire E étant rejeté comme entaché d'erreur lorsque $x \neq C$ (mod kgV(r,s)).

**14.** Dispositif cryptographique,

a) comportant au moins un dispositif d'exponentiation qui effectue une étape de calcul comprenant une exponentiation modulaire E

$$E = x^d \text{ (mod p.q)}$$

avec un premier facteur premier p, un second facteur premier q, un exposant d et une base x,

**caractérisé en ce que**

b) pour effectuer l'exponentiation modulaire on choisit deux nombres naturels r et s, ainsi que deux nombres $b_1$ et $b_2$, respectivement compris dans l'intervalle [1,...,r-1] et [1,...,s-1] et respectivement premiers par rapport à r et s, $b_1$ et $b_2$ satisfaisant à la condition $b_1 = b_2$ (mod ggT(r,s)) où ggTr(s) représente le plus grand dénominateur commun de r et s ;

c) à l'aide des deux nombres $b_1$ et $b_2$, on calcule, d'après le groupe chinois de valeurs résiduelles, les valeurs $x_1$ et $x_2$ qui satisfont aux conditions suivantes :

$x_1 = x$ (mod p) ; $x_1 = b_1$ (mod r)

$x_2 = x$ (mod q) ; $x_2 = b_2$ (mod s)

et l'on effectue ensuite les étapes de calcul suivantes :

$$d\_1 = d \text{ (mod } \Phi(p))$$

$$d\_2 = d \text{ (mod } \Phi(q)$$

$$z_1 = x_1^{d\_1} \text{ (mod p.r)}$$

$$z_2 = x_2^{d\_2} \text{ (mod q.s)},$$

$\Phi(.)$ représentant la fonction d'Euler et kgV(r,s) le plus petit multiple commun de r et s ;

d) ensuite, d'après le groupe chinois de valeurs résiduelles, un nombre z est calculé à partir de $z_1$ et $z_2$ avec $z = z_1$ (mod p.r) et $z = z_2$ (mod (q.s) ;

e) le résultat E de l'exponentiation est calculé par réduction de z modulo p.q ;

f) le nombre z calculé au préalable (et conséquemment aussi, de manière automatique, le résultat E) est vérifié, dans une étape de vérification, du point de vue des erreurs de calcul ;

g) l'étape de vérification contient les opérations de calcul suivantes :

g1) calcul des nombres

$$C_1 = b_1^{d\_1} \text{ (mod.r)}$$

$$C_2 = b_2^{d\_2} \ (mod.s)$$

où $d\_1$ et $d\_2$ sont réduits avant d'effectuer l'exponentiation modulaire modulo $\Phi(r)$ ou $\Phi(s)$ ;

g2) comparaison des valeurs $z_1$ et $C_1$ modulo r, ainsi que $z_2$ et $C_2$ modulo s, en rejetant comme entaché d'erreur le résultat de l'exponentiation modulaire E lorsque l'on a $C_1 \neq z_1$ mod r ou $C_2 \neq z_2$ mod s.

**15.** Dispositif cryptographique selon la revendication 14, **caractérisé en ce que** les nombres r et s sont impairs.

**16.** Dispositif cryptographique selon les revendications 13 à 15, **caractérisé en ce que** les nombres r et s sont sélectionnés dans le domaine $[0, 2^k\text{-}1]$ avec $16 \leq k \leq 32$.

**17.** Dispositif cryptographique selon les revendications 13 à 16, **caractérisé en ce qu'**au moins l'un des nombres r et s est choisi de manière que la représentation binaire du produit p.r ou q.s contienne le plus grand nombre possible de "un" directeurs.

**18.** Dispositif cryptographique selon les revendications 13 à 17, **caractérisé en ce que** les deux nombres r et s sont choisis de manière que la représentation binaire du produit p.r et du produit q.s contienne le plus grand nombre possible de "un" directeurs.

**19.** Dispositif cryptographique selon l'une quelconque des revendications 17 ou 18, **caractérisé en ce que**

a) dans une première étape partielle on sélectionne pour au moins l'un des nombres r et s un nombre optimal, $r_{opt}$ ou $s_{opt}$ respectivement, sans limitation due à la condition suivant laquelle d est choisi relativement premier par rapport à $\Phi(kgV(r,s))$;

b) dans une seconde étape partielle on sélectionne une valeur voisine $r = r_{opt} - i$ ou $s = s_{opt} - i$ respectivement, avec i = 0, 1, ..., k, de telle sorte que d est relativement premier par rapport à $\Phi(kgV(r,s))$.

**20.** Dispositif cryptographique selon l'une quelconque des revendications 17 ou 18, **caractérisé en ce que**

a) dans une première étape partielle on sélectionne pour chacun des nombres r et s un nombre optimal correspondant, $r_{opt}$ et $s_{opt}$ respectivement, sans limitation due à la condition suivant laquelle d est choisi relativement premier par rapport à $\Phi(kgV(r,s))$ ;

b) dans une seconde étape partielle on sélectionne une valeur $r = 2^1.r_{opt}$ ou $s = 2^1.s_{opt}$ respectivement, avec 1 = 0, 1, ..., j, de telle sorte que d est relativement premier par rapport à $\Phi(kgV(r,s))$.

**21.** Dispositif cryptographique selon l'une quelconque des revendications 17 ou 18, **caractérisé en ce que**,

a) dans une première étape partielle on sélectionne au moins l'un des nombres $r_{opt}$ et $s_{opt}$ tout d'abord sans limitation due à la condition suivant laquelle d est choisi relativement premier par rapport à $\Phi(kgV(r,s))$ ;

b) dans une seconde étape partielle on sélectionne une valeur voisine $r = r_{opt} - i$ ou $s = s_{opt} - i$ respectivement, avec i = 0, 1, ..., k, de telle sorte que d est relativement premier par rapport à $\Phi(kgV(r,s))$, pour autant qu'une telle valeur existe pour i = 0, 1, ..., k ;

c) dans une troisième étape partielle on sélectionne une valeur $r = 2^1.r_{opt}$ ou $s = 2^1.s_{opt}$ respectivement, avec 1 = 0, 1, ..., j, de telle sorte que d est relativement premier par rapport à $\Phi(kgV(r,s))$, dans le cas où aucune valeur n'a été sélectionnée dans la seconde étape partielle.

**22.** Dispositif cryptographique selon l'une quelconque des revendications précédentes, **caractérisé en ce qu'**il contient le procédé RSA.

**23.** Dispositif cryptographique selon l'une quelconque des revendications précédentes, **caractérisé en ce qu'**il contient le procédé des signatures de Rabin.

**24.** Dispositif cryptographique selon l'une quelconque des revendications précédentes, **caractérisé en ce qu'**il contient le procédé du schéma d'identification de Fiat-Shamir.